# EUROPEAN PATENT SPECIFICATION

(11) **EP 1 473 958 B1**
(45) Date of publication and mention of the grant of the patent: **13.06.2007**
(21) Application number: 04252279.7
(22) Date of filing: 19.04.2004
(51) Int. Cl.: H04Q 7/38

(54) **A method of releasing a connection between a mobile user terminal and a network**
Verfahren zur Verbindungsauflösung zwischen einem mobilen Benutzergerät und einem Netzwerk
Procédé de disconnexion entre un terminal mobile d'utilisateur et un réseau

(30) Priority: 30.04.2003 US 426597
(43) Date of publication of application: 03.11.2004
(73) Proprietor: LUCENT TECHNOLOGIES INC., Murray Hill, NJ 07974-0636 (US)
(72) Inventor: Cao, Qiang, Swindon, Wiltshire SN2 3XL (GB); Charriere, Patrick G. V., Tetbury GL8 8DR (GB); Davies, Richard LL., Corsham, SN13 9JG (GB); Lim, Seau S., Swindon SN1 1HF (GB); Sapiano, Philip C., Corsham, SN13 9AY (GB)
(74) Representative: Sarup, David Alexander

(56) References cited:
- WO-A-00/76243
- WO-A-01/89251
- WO-A-02/01903
- ETSI: "Handover Requirements between UMTS and GSM or other Radio Systems (3G TS 22.129 version 3.2.0)" EUROPEAN TELECOMMUNICATION STANDARD, December 1999 (1999-12), pages 1-20, XP002143722

## Description

### TECHNICAL FIELD

The present invention relates to telecommunications, and more particularly, wireless communications.

### BACKGROUND OF THE INVENTION

Telecom operators consider the ability to make Inter system handover of a mobile user terminal from a UMTS network to a GPRS network occurs under the control of the mobile user terminal. The mobile user terminal performs a cell reselection, with the assistance of the UTRAN network by providing system information to the mobile user terminal for the cell reselection.

While the mobile user terminal is in any one of CELL_FACH, CELL_PCH or URA_PCH states, e.g., when the mobile user terminal is listening to the Forward Access Channel ("FACH") channel, or paging channel ("PCH") of the cell or the paging channel of the UTRAN registration area ("URA"), then based on received system information, e.g., how much stronger the signal of the GPRS network is, the mobile user terminal makes a cell reselection to the GPRS network. The mobile user terminal initiates the establishment of a connection to the GPRS network in accordance with GPRS standards. When a GPRS cell is selected and a mobile user terminal to GPRS network connection establishment procedure is initiated, the mobile user terminal should release all dedicated UTRAN specific resources. The UTRAN network accordingly promptly requests to release a so-called IU connection, i.e. the connection between a radio network controller ("RNC") and serving GPRS support node ("SGSN"), deletes the mobile user terminal information (context) stored in the UTRAN network and releases the resources dedicated to the mobile user terminal. Failure to do so may cause unnecessary excessive use of precious UTRAN resources.

One approach is for a fixed timeout period to expire before UTRAN resources are released. However, a serious waste of UTRAN resource thus occurs when mobile user terminal has selected a GPRS cell for connection and so has initiated mobile user terminal to GPRS network connection, but at the same time the UTRAN network still keeps the resources dedicated for the mobile user terminal for far longer time than necessary. The capacity of the UTRAN network is reduced by this holding of UTRAN resources unused for longer than necessary. This is especially the case where a UMTS signalling connection release request needs to be initiated by the UTRAN network (due to the fact that the core network ("CN") is not able to promptly delete the mobile user terminal's previous UMTS signalling connection) after the mobile user terminal's GPRS signalling connection has been established.

WO 01/89251 A1 describes an arrangement in which a timer releases a connection if there is no activity in a predefined period of time. The time period may be fixed, or dynamic, its adjustment being based on information of available resources.

### SUMMARY OF THE INVENTION

The present invention provides a method of releasing a connection between a mobile user terminal (22) and a first network (9) if a report of presence has not been received from the mobile user terminal by the first network (9) for a predetermined period, comprising determining if the mobile user terminal (22) is: a) capable of communicating also with another type of network (6) for mobile telecommunications, and b) in an area covered by a network (6) of said another type; and, if such a determination is affirmative for both a) and b), such that handover to said network of said another type (6) is possible, resetting the predetermined period to select it to be shorter than in the absence of such an affirmative determination.

Advantageous embodiments provide its UMTS network with efficient inter-system handover capability without compromising system capacity. A timer based solution is provided for the UTRAN network to request release of the resources dedicated to a dual mode (e.g., UMTS/GPRS) mobile user terminal from the UTRAN network when the mobile user terminal has completed the handover from the UMTS network to another type of network (e.g., GPRS). The timer is modified based upon whether the mobile user terminal is capable of handing over from UMTS to GPRS (i.e inter RAT capability) and whether the mobile user terminal is in a UMTS-GPRS handover region.

In the advantageous embodiments, the monitoring timer for keeping alive the mobile user terminal's UMTS connection while briefly out of service area is thus adapted to an individual mobile user terminal's situation. In particular, the mobile user terminal's signalling monitoring timer (holding timer) used in the UTRAN network is reset so that the mobile user terminal's signalling connection won't be maintained for an excessively long time.

As compared to the known approach of using a fixed timer for all mobile user terminals regardless of mobile user terminal's inter radio access technology (inter RAT) capability and whether or not they are in an inter system handover region, considerable UTRAN resources savings result.

Advantageous embodiments are for UMTS-GPRS handover. Other embodiments relate to any inter-system handover from UMTS by means of cell reselection. The UMTS network is compliant with Third Generation Partnership Project (3GPP) standards.

Advantageously, the shorter predetermined period is selected by the mobile user terminal sending presence reports more frequently than otherwise causing the first network to reduce the predetermined periods timed from receipt of the latest received presence report during which the first network either receives a further presence report causing the timing to be restarted or sends a call connection release request if no further presence report from the mobile user terminal is received within the predetermined period.

Advantageously, the call connection release request is sent to a node of the first network connecting the first network and the network of said another type, said node controlling call connection from the first network to the mobile user terminal.

Advantageously, at least one of the networks is a wideband code division multiple access (W-CDMA) network. Advantageously, the first network is a Universal Mobile Telecommunications System (UMTS) network.

Advantageously, the node is a serving GPRS support node (SGSN).

Advantageously, the network of said other type is a General Packet Radio System (GPRS) network.

The present invention also provides a system for mobile telecommunications comprising a first network and a network for mobile telecommunications of another type, the first network comprising releasing means operative to release a connection with a mobile user terminal when a report of presence has not been received from the mobile user terminal by the first network for a predetermined period, the first network comprising selection means and determination means, the selection means being operative to select the predetermined period to be shorter than otherwise upon the mobile user terminal being determined by the determination means both as being capable of communicating also with another type of network for mobile telecommunications, and being in an area covered by a network of said another type such that handover to said network of said another type is possible.

Advantageously, in use, the shorter predetermined period is selected by the mobile user terminal sending presence reports more frequently than otherwise causing the selection means to reduce the predetermined periods timed from receipt of the latest received presence report during which the first network either receives a further presence report causing the timing to be restarted or sends a call connection release request if no further presence report from the mobile user terminal is received within the predetermined period.

Advantageously, a node of the first network connects the first network and the network of said another type and controls call connection from the first network to the mobile user terminal, and in which in use a call connection release request is sent to the node.

Advantageously, at least one of the networks is a wideband code division multiple access ("W-CDMA") network. Advantageously, the first network is a Universal Mobile Telecommunications System ("UMTS") network.

Advantageously, the node is a serving GPRS support node ("SGSN").

Advantageously, the network of said other type is a General Packet Radio System ("GPRS") network.

The present invention can also provide a Universal Mobile Telecommunications System ("UMTS") network for mobile telecommunications comprising releasing means operative to release a connection with a mobile user terminal when a report of presence has not been received from the mobile user terminal by the network for a predetermined period, the network comprising selection means and determination means, the selection means being operative to select the predetermined period to be shorter than otherwise upon the mobile user terminal being determined by the determination means both as being capable of communicating also with another type of network for mobile telecommunications, and being in an area covered by a network of said another type such that handover to a network of said another type is possible.

Advantageously, in use, the shorter predetermined period is selected by the mobile user terminal sending presence reports more frequently than otherwise causing the selection means to reduce the predetermined periods timed from receipt of the latest received presence report during which the network either receives a further presence report causing the timing to be restarted or sends a call connection release request if no further presence report from the mobile user terminal is received within the predetermined period.

### BRIEF DESCRIPTION OF THE DRAWINGS

The present invention may be better understood from reading the following description of exemplary embodiments, with reference to the attached drawings, wherein below:
Figure 1 is a diagram illustrating UMTS and GPRS networks;
Figure 2 is a diagram illustrating adjustment of the timer for receiving a report of presence from a mobile user terminal; and
Figure 3 is a diagram illustrating some functionality of the radio network controller (RNC) of the UMTS network.

### DETAILED DESCRIPTION

An embodiment relates to a network for mobile telecommunications comprising a first network and a network for mobile telecommunications of another type, the first network comprising releasing means operative to release a connection with a mobile user terminal when a report of presence has not been received from the mobile user terminal by the first network for a predetermined period.

The embodiment also relates to a Universal Mobile Telecommunications System ("UMTS") network for mobile telecommunications comprising releasing means operative to release a connection with a mobile user terminal when a report of presence has not been received from the mobile user terminal by the network for a predetermined period.

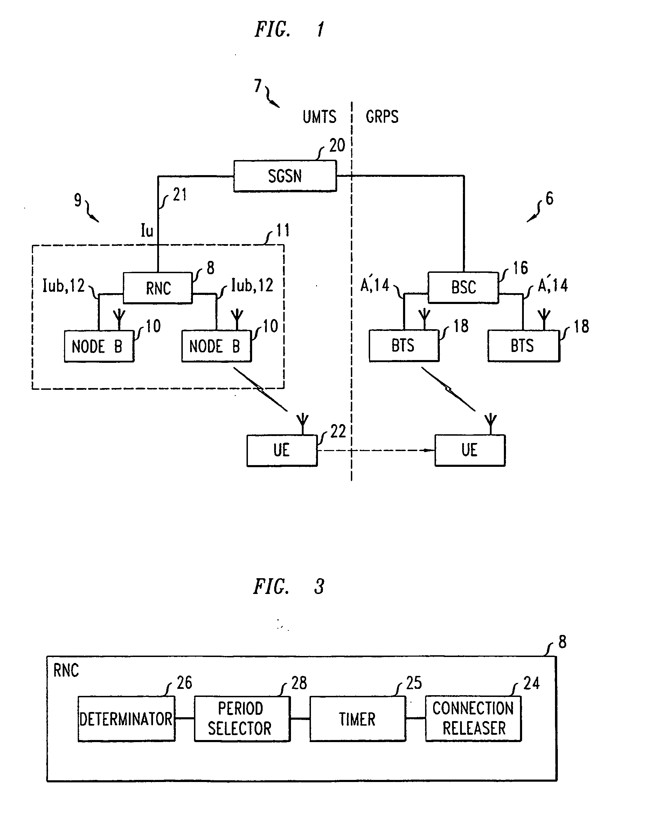

As shown in Figure 1, the advantageous network 7 consists of a UMTS network 9 and a GPRS network 6. Considering the UMTS network 9, in particular the main part of which is known as a UMTS terrestrial radio access network ("UTRAN") 11, there are multiple base station controllers, known as radio network controller (RNC) in UMTS terminology, each controlling several respective base stations via respective interfaces known as I_{ub} interfaces 12. In Figure 1, just one radio network controller 8 and two UMTS base stations 10 (Node B in UMTS terminology) are shown for simplicity. Each UMTS base station 10 typically has three cells (e.g., radio coverage areas, also known as sectors, not shown) as the UMTS base station has three directional antennas angled at 120 degrees to each other in azimuth. Radio network controllers ("RNC") each control several UMTS base stations and hence a number of cells.

Considering the GPRS network 6, there are multiple base station controllers ("BSC") each controlling several respective base stations via respective interfaces known as A' interfaces 14. In Figure 1, just one GPRS base station controller 16 and two GPRS base stations 18 (known as base transceiver stations ("BTS") in GPRS terminology) are shown for simplicity. GPRS base station controllers ("BSC") each control several GPRS base stations.

The UTRAN network 11 is connected to a serving GPRS support node ("SGSN") 20 (which is part of the UMTS network 9) via an interface 21 known as an Iu interface. The base station controller is also connected to the serving GPRS support node (SGSN) 20.

The UMTS network 9 is required to be able to handover a mobile user terminal 20 (often denoted UE which is short for user equipment) to the other network, namely GPRS network 6 if the mobile user terminal ("UE") is dual mode capable (e.g., usable in both UMTS and GSM/GPRS networks).

Inter system handover from the UMTS network 9 to the GPRS network 6 occurs by an operation under the control of the mobile user terminal 22, namely cell reselection, with assistance from the UTRAN network 11 in providing information required for the cell reselection.

While in CELL_FACH, CELL_PCH or URA_PCH states, i.e. when the mobile user terminal 22 is listening to the CELL_FACH channel or paging channel of the cell or the paging channel of the UTRAN 11 registration area (URA), then based on received system information, e.g., how much stronger the signal of the other system is, the mobile user terminal 22 makes a cell reselection to the GPRS network 6. The mobile user terminal 22 initiates the establishment of a connection to the GPRS network 6 in accordance with GPRS standards. When a GPRS cell is selected and a mobile user terminal 22 to GPRS connection establishment procedure is initiated, the mobile user terminal 22 should release all dedicated UTRAN specific resources. The UTRAN network 11 accordingly promptly requests to release IU connection, e.g., the connection between the radio network controller ("RNC") 8 and the serving GPRS support node ("SGSN") 20 over the Iᵤ interface 21, deletes the mobile user terminal's information (known as context information) stored in the UTRAN network 11, and further releases all resources dedicated to the mobile user terminal 22.

### Modifying The Timer

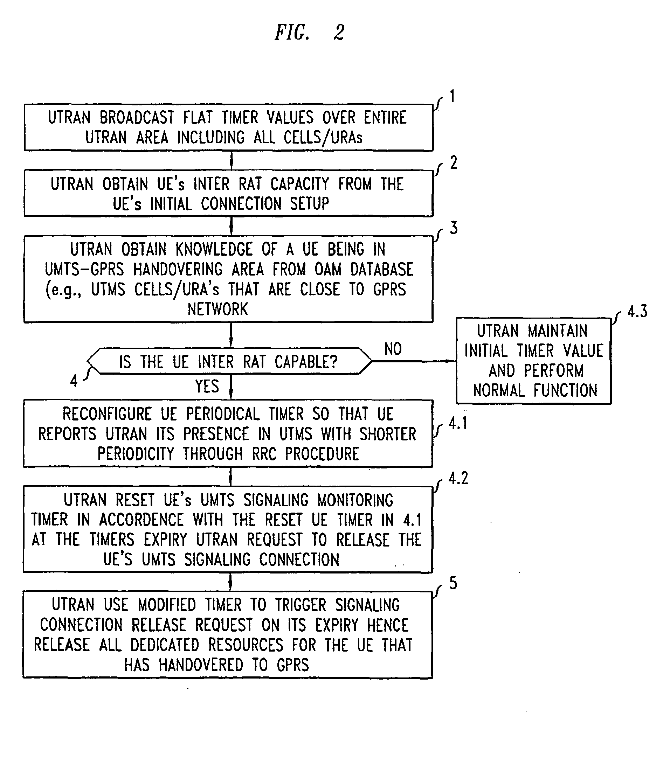

As shown in Figure 2, a timer based solution is developed for the UTRAN network 11 to request release of the resources dedicated to dual mode (e.g., UMTS/GPRS) mobile user terminals 22 in handover from the UTRAN network 11 when mobile user terminal has completed the inter system handover from UMTS to the other system (e.g., GPRS). The solution is based upon modifying the timer duration based on the mobile user terminal's inter radio access technology (inter RAT) capability (i.e the fact that the mobile user terminal 22 is duel mode capable) and the fact of the mobile user terminal 22 being in a handover region between the two types (e.g., GPRS, UMTS) of networks 4,6.

As shown in Figure 3, the radio network controller (RNC) 8 includes a releasing function 24 operative to release a connection with the mobile user terminal 22 when a report of presence has not been received from the mobile user terminal by the network for a predetermined period as determined by a timer 25, the radio network controller ("RNC") 8 also includes a selector function 28 and a determination function 26. The selector function 28 is operative to select the predetermined period to be shorter than otherwise upon the mobile user terminal 22 being determined by the determination function 26 both as being capable of communicating also with another type of network 6 for mobile telecommunications, and being in an area covered by a network 6 of said another type such that handover to a network 6 of said another type is possible.

The approach is suitable for mobile user terminals 22 connected to packet switched ("PS") services in any of CELL_FACH, URA_PCH, or CELL_PCH states, as in these states, cell reselection is possible.

As shown in Figure 2, in more detail:
Step 1: The UTRAN network 11 broadcasts over the entire UTRAN network coverage area including all cells and UTRAN registration areas to mobile user terminals default values for mobile user terminal timers as specified in 3GPP standards. This include timers denoted T305=30minutes, T316=30seconds, and T317=180secs, which are used in deciding how often a mobile user terminal should inform the UTRAN network 11 that it wishes the connection to be maintained. This step 1 is denoted 1 in Figure 2 (and so on for subsequent steps).
Step 2: The UTRAN network 11 obtains the mobile user terminal's inter radio access technology (inter RAT) capability information from the mobile user terminal's initial connection setup request (inter radio access technology (inter RAT) capability is the mobile user terminal being able access to the network via different radio access technology - e.g., UMTS, GSM/GPRS. The UTRAN network 11 received the request sometime before and stored the request for reference purposes.
Step 3: The UTRAN network 11 obtains knowledge of a mobile user terminal 22 being in a UMTS-GPRS area of possible handover from an OAM (operation, administration, and maintenance function) database, which stores locations of base stations (Node Bs). The database includes knowledge of which UMTS cells and/or UTRAN registration areas are adjacent to a GPRS network.
Step 4: The UTRAN network 11 checks by taking e.g. signal strength measurements if the mobile user terminal 22 that is in the area of possible handover is capable of performing handover from UMTS to GPRS.
   If Yes:
   Step 4.1: The periodical timer of the mobile user terminal 22 is reconfigured so that mobile user terminal 22 reports to the UTRAN network 11 its presence in UMTS with shorter than usual periodicity. This reconfiguration is done by appropriate radio resource control (RRC) messaging to the mobile user terminal 22.
   Step 4.2: The UTRAN network 11 adjusts the timing period of the UMTS monitoring timer 25 (for that mobile user terminal 22) in accordance with the reset mobile user terminal timer in 4.1. At the monitoring timer's expiry (i.e if and when the mobile user terminal 22has failed to report its presence for a predetermined timed period), the UTRAN network 11 requests the serving GPRS support node (SGSN) 20 to release the mobile user terminal's UMTS signalling connection.
Step 5: The UTRAN network 11 uses the modified timer 25 to trigger a signalling connection release request on expiry of the modified timed period to the serving GPRS support node (SGSN). In consequence, the serving GPRS support node (SGSN) 20 tears down the connection between itself and the mobile user terminal 22 (via the UTRAN network 11), i.e. releases all dedicated resources for the mobile user terminal 22 that has handovered to GPRS.
   Else if No:
   Step 4.3: If the mobile user terminal is not capable of performing handover, the UTRAN network 11 may not send any early release request for the mobile user terminal 22 (i.e. functions 4.1 and 4.2 above are not performed). Rather the UTRAN network 11 uses the usual (initially set) timing value when determining whether the mobile user terminal has failed to report in the timed period that it is still present. If so, a signalling connection release request is sent to the serving GPRS support node (SGSN), the serving GPRS support node (SGSN) then tears down the connection between itself and the mobile user terminal 22 (via the UTRAN network 11).

In other embodiments, rather than handover being to a GPRS network 6, the handover may be to another type of mobile telecommunications network, such as another type of wideband code division multiple access ("W-CDMA") network.

### Abbreviations

- BSC: Base Station Controller
- BTS: Base Transceiver Station
- Cell_FACH: Cell Forward Access Channel
- Cell_PCH: Cell Paging Channel
- CN: Core Network
- GPRS: General Packet Radio System
- Node B: Base station (UMTS terminology)
- RAT: Radio Access Technology
- RNC: Radio Network Controller
- SGSN: Signalling GPRS support node
- UE: User Equipment, i.e. mobile user terminal
- UMTS: Universal Mobile Telecommunications System
- URA: UTRAN Registration Area
- URA_PCH: UTRAN Registration Area Paging Channel
- UTRAN: UMTS Terrestrial Radio Access Network

## Claims

1. A method of releasing a connection between a mobile user terminal (22) and a first network (9) if a report of presence has not been received from the mobile user terminal by the first network (9) for a predetermined periods, **characterised by** determining if the mobile user terminal (22) is:
a) capable of communicating also with another type of network (6) for mobile telecommunications, and
b) in an area covered by a network (6) of said another type;
and, if such a determination is affirmative for both a) and b), such that handover to said network of said another type (6) is possible, resetting the predetermined period to select it to be shorter than in the absence of such an affirmative determination.

2. A method according to Claim 1, wherein the shorter predetermined period is selected by the mobile user terminal (22) sending presence reports more frequently than otherwise causing the first network (9) to reduce the predetermined periods timed from receipt of the latest received presence report during which the first network (9) either receives a further presence report causing the timing to be restarted or sends a call connection release request if no further presence report from the mobile user terminal (22) is received within the predetermined period.

3. A method according to Claim 2, wherein the call connection release request is sent to a node (20) of the first network (9) connecting the first network (9) and the network (6) of said another type, said node (20) controlling call connection from the first network to the mobile user terminal (22).

4. A method according to Claim 3, wherein the node (20) is a serving GPRS support node (SGSN), and said network (6) of said other type is a General Packet Radio System (GPRS) network.

5. A method according to any of Claims 1 to 4, wherein at least one of the networks is a wideband code division multiple access (W-CDMA) network.

6. A method according to Claim 4, wherein the first network is a Universal Mobile Telecommunications System (UMTS) network.

7. A system for mobile telecommunications comprising a first network (9) and a network (6) for mobile telecommunications of another type, the first network comprising:
releasing means (24) operative to release a connection with a mobile user terminal (22) if a report of presence has not been received from the mobile user terminal (22) by the first network (9) for a predetermined period; and
**characterised by**
selection means (28) and determination means (26), the selection means (28) being operative to select the predetermined period to be shorter than otherwise upon the mobile user terminal (22) being determined by the determination means (26) both as being capable of communicating also with another type of network (6) for mobile telecommunications, and being in an area covered by a network (6) of said another type such that handover to said network (6) of said another type is possible.

8. A system according to Claim 7, wherein the selection means is arranged to restart the predetermined period timed on receipt of the latest received presence report and, when the shorter predetermined period is selected, the mobile user terminal is arranged to send presence reports more frequently than otherwise, causing the selection means to reduce the predetermined period.

9. A system according to Claim 7 or Claim 8, wherein a node (20) of the first network (9) is arranged to connect the first network (9) and the network (6) of said another type and to control call connection from the first network to the mobile user terminal, and comprising means for sending a call connection release request to said node (20).

10. A system according to Claim 9, wherein the node (20) is a serving GPRS support node (SGSN) and the network of said other type is a General Packet Radio System (GPRS) network.

## Patentansprüche

1. Verfahren zum Auslösen einer Verbindung zwischen einem mobilen Benutzerendgerät (22) und einem ersten Netz (9), wenn ein Gegenwartsbericht vom mobilen Benutzerendgerät eine vorbestimmte Zeit lang nicht vom ersten Netz (9) empfangen worden ist, **gekennzeichnet durch** Bestimmen, ob das mobile Benutzerendgerät (22):
a) in der Lage ist, auch mit einer anderen Art Netz (6) für mobile Telekommunikation zu kommunizieren, und
b) sich in einem von einem Netz (6) der anderen Art versorgten Bereich befindet;
und wenn eine solche Bestimmung für sowohl a) als auch b) positiv ausfällt, so daß eine Weiterschaltung zu dem Netz der anderen Art (6) möglich ist, Rücksetzen der vorbestimmten Zeitdauer, um sie als kürzer als bei der Abwesenheit einer solchen positiven Bestimmung auszuwählen.

2. Verfahren nach Anspruch 1, wobei die kürzere vorbestimmte Zeitdauer **dadurch** ausgewählt wird, daß das mobile Benutzerendgerät (22) Gegenwartsberichte häufiger als sonst sendet, was das erste Netz (9) zum Verringern der vorbestimmten Zeitdauern veranlaßt, die zeitlich vom Empfang des letzten empfangenen Gegenwartsberichts bestimmt werden, während denen das erste Netz (9) entweder einen weiteren Gegenwartsbericht empfängt, was einen Neustart der Zeitbestimmung veranlaßt, oder eine Rufverbindungsauslöseanforderung sendet, wenn kein weiterer Gegenwartsbericht vom mobilen Benutzerendgerät (22) innerhalb der vorbestimmten Zeitdauer empfangen wird.

3. Verfahren nach Anspruch 2, wobei die Rufverbindungsauslöseanforderung zu einem das erste Netz (9) und das Netz (6) der anderen Art verbindenden Knoten (20) des ersten Netzes (9) gesendet wird, wobei dieser Knoten (20) die Rufverbindung vom ersten Netz im mobilen Benutzerendgerät (22) steuert.

4. Verfahren nach Anspruch 3, wobei der Knoten (20) ein SGSN (serving GPRS support node) ist und das Netz (6) der anderen Art ein GPRS-Netz (General Packet Radio System) ist.

5. Verfahren nach einem der Ansprüche 1 bis 4, wobei mindestens eines der Netze ein W/CDMA-Netz (wideband code division multiple access) ist.

6. Verfahren nach Anspruch 4, wobei das erste Netz ein UMTS-Netz (Universal Mobile Telecommunications System) ist.

7. System für mobile Telekommunikation mit einem ersten Netz (9) und einem Netz (6) für mobile Telekommunikation einer anderen Art, wobei das erste Netz folgendes umfaßt:
Auslösemittel (24) zum Auslösen einer Verbindung von einem mobilen Benutzerendgerät (22), wenn ein Gegenwartsbericht vom mobilen Benutzerendgerät (22) eine vorbestimmte Zeit lang nicht vom ersten Netz (9) empfangen worden ist; und **gekennzeichnet durch**
Auswählmittel (28) und Bestimmungsmittel (26), wobei das Auswählmittel (28) zum Auswählen der vorbestimmten Zeitdauer als kürzer als sonst fungiert, wenn vom Bestimmungsmittel (26) das mobile Benutzerendgerät (22) sowohl als zum Kommunizieren auch mit einer anderen Art Netz (6) für mobile Telekommunikation fähig als auch sich in einem von einem Netz (6) der anderen Art versorgten Bereich befindlich bestimmt wird, so daß eine Weiterschaltung zu dem Netz (6) der anderen Art möglich ist.

8. System nach Anspruch 7, wobei das Auswählmittel zum Neustarten der vorbestimmten Zeitdauer zeitlich bestimmt bei Empfang des letzten empfangenen Gegenwartsberichts angeordnet ist und wenn die kürzere vorbestimmte Zeitdauer ausgewählt wird, das mobile Benutzerendgerät zum häufigeren Senden von Gegenwartsberichten als sonst angeordnet ist, wodurch das Auswählmittel veranlaßt wird, die vorbestimmte Zeitdauer zu verringern.

9. System nach Anspruch 7 oder Anspruch 8, wobei ein Knoten (20) des ersten Netzes (9) zum Verbinden des ersten Netzes (9) und des Netzes (6) der anderen Art und zum Steuern einer Hochverbindung vom ersten Netz zum mobilen Benutzerendgerät angeordnet ist und mit Mitteln zum Senden einer Rufverbindungsauslöseanforderung zu diesem Knoten (20).

10. System nach Anspruch 9, wobei der Knoten (20) ein SGSN (serving GPRS support node) ist und das Netz der anderen Art ein GPRS-Netz (General Packet Radio System) ist.

## Revendications

1. Procédé de libération d'une connexion entre un terminal d'utilisateur mobile (22) et un premier réseau (9) si un rapport de présence n'a pas été reçu du terminal d'utilisateur mobile par le premier réseau (9) pendant une période prédéterminée, **caractérisé par** la détermination si le terminal d'utilisateur mobile (22) est :
a) capable de communiquer également avec un autre type de réseau (6) de télécommunications mobiles, et
b) dans une zone couverte par un réseau (6) dudit autre type ;
et, si une telle détermination est affirmative pour à la fois a) et b), si bien qu'un transfert sur ledit réseau dudit autre type (6) est possible, le réglage à nouveau de la période prédéterminée pour qu'elle soit plus courte qu'en l'absence d'une telle détermination affirmative.

2. Procédé selon la revendication 1, dans lequel la période prédéterminée plus courte est sélectionnée par le terminal d'utilisateur mobile (22) qui envoie des rapports de présence plus fréquemment qu'il ne le ferait autrement amenant le premier réseau (9) à réduire les périodes prédéterminées minutées à compter de la réception du dernier rapport de présence reçu durant lesquelles le premier réseau (9) soit reçoit un autre rapport de présence l'amenant à relancer le minutage, soit envoie une requête de libération de connexion d'appel si aucun autre rapport de présence provenant du terminal d'utilisateur mobile (22) n'est reçu au cours de la période prédéterminée.

3. Procédé selon la revendication 2, dans lequel la requête de libération de connexion d'appel est envoyée à un noeud (20) du premier réseau (9) connectant le premier réseau (9) et le réseau (6) dudit autre type, ledit noeud (20) commandant la connexion d'appel depuis le premier réseau jusqu'au terminal d'utilisateur mobile (22).

4. Procédé selon la revendication 3, dans lequel le noeud (20) est un noeud de support GPRS de desserte (SGSN), et ledit réseau (6) dudit autre type est un réseau de Système Radio par Paquets général (GPRS).

5. Procédé selon l'une quelconque des revendications 1 à 4, dans lequel au moins l'un des noeuds est un réseau à accès multiple par différence de code à large bande (W-CDMA).

6. Procédé selon la revendication 4, dans lequel le premier réseau est un réseau de Système de Télécommunications Mobiles Universel (UMTS).

7. Système de télécommunications mobiles comprenant un premier réseau (9) et un réseau (6) de télécommunications mobiles d'un autre type, le premier réseau comprenant :
un moyen de libération (24) servant à libérer une connexion avec un terminal d'utilisateur mobile (22) si un rapport de présence n'a pas été reçu du terminal d'utilisateur mobile (22) par le premier réseau (9) pendant une période prédéterminée ; et **caractérisé par**
un moyen de sélection (28) et un moyen de détermination (26), le moyen de sélection (28) servant à sélectionner la période prédéterminée pour qu'elle soit plus courte qu'elle ne le serait autrement lorsque le moyen de détermination (26) détermine que le terminal d'utilisateur mobile (22) est à la fois capable de communiquer également avec un autre type de réseau (6) de télécommunications mobiles, et se trouve dans une zone couverte par un réseau (6) dudit autre type si bien qu'un transfert sur ledit réseau (6) dudit autre type est possible.

8. Système selon la revendication 7, dans lequel le moyen de sélection est agencé pour relancer la période prédéterminée minutée sur réception du dernier rapport de présence reçu et, quand la période prédéterminée plus courte est sélectionnée, le terminal d'utilisateur mobile est agencé pour envoyer des rapports de présence plus fréquemment qu'il ne le ferait autrement, amenant le moyen de sélection à réduire la période prédéterminée.

9. Système selon la revendication 7 ou la revendication 8, dans lequel un noeud (20) du premier réseau (9) est agencé pour connecter le premier réseau (9) et le réseau (6) dudit autre type et commander la connexion d'appel depuis le premier réseau jusqu'au terminal d'utilisateur mobile, et comprenant un moyen pour envoyer une requête de libération de connexion d'appel audit noeud (20).

10. Système selon la revendication 9, dans lequel le noeud (20) est un noeud de support GPRS de desserte (SGSN), et ledit réseau (6) dudit autre type est un réseau de Système Radio par Paquets général (GPRS).
